# EUROPEAN PATENT APPLICATION

(11) **EP 1 340 728 A1**
(43) Date of publication of application: **03.09.2003**
(21) Application number: 01982752.6
(22) Date of filing: 09.11.2001
(51) Int. Cl.: C04B 28/00, C04B 14/20, C09D 7/12, C09D 1/00, C09D 201/00, B09B 5/00, B28B 1/52, B28B 3/02, B28B 3/20, E04B 1/64, E04F 13/14

(54) **COMPOSITION FOR BUILDING MATERIAL AND BUILDING MATERIAL**

(30) Priority: 10.11.2000 JP 2000343469; 23.03.2001 JP 2001085952; 07.11.2001 JP 2001342044; 07.11.2001 JP 2001342073; 07.11.2001 JP 2001342082; 07.11.2001 JP 2001342085
(71) Applicant: Mitsubishi Shoji Construction Materials Corporation, Tokyo 151-0051 (JP)
(72) Inventor: FUKUDA, Yoshiaki, Ohta-ku, Tokyo 146-0083 (JP); SHIOCHI, Hirofumi, Chiba-shi, Chiba 262-0032 (JP); OKUBO, Motomasa, Kitasouma-gun, Ibaraki 300-1600 (JP); YAHAGI, Fumiyuki, Setagaya-ku, Tokyo 157-0064 (JP); MITA, Toshihiko, Saitama-shi, Saitama 330-0824 (JP); ISHIHARA, Kazuo, Yokohama-shi, Kanagawa 244-0801 (JP)
(74) Representative: Patentanwälte Ruff, Wilhelm, Beier, Dauster & Partner
(86) International application number: JP0109847
(87) International publication number: WO02038516

(57) **Abstract**

The object of the present invention is to provide a construction and coating composition that effectively utilizes vermiculite as a natural resource and is able to satisfy requirements for humidity control and/or deodorizing as well as an attractive appearance, while also offering superior balance between the amount and rates of moisture absorption and release, in particular. This object is achieved by a composition in which non-expanded vermiculite is blended into a base material so that the blended amount is 5-70 wt% of the total composition (solid portion). In addition, the above construction material can be converted into soil by crushing when it has become a waste construction material.

## Description

### BACKGROUND OF THE INVENTION

### Technical Field

The present invention relates to a construction material composition, a construction material that uses it, and their production methods. Moreover, the present invention relates to a coating composition and a coated object that is coated therewith. Moreover, the present invention relates to a soil conversion method for construction materials.

### Background Art

In the past, during the manufacturing of construction materials, base materials were selected for various purposes, and various materials were frequently blended into each type of those base materials.

One particular example of a mineral-based material is vermiculite. This vermiculite is a clay mineral that resembles biotite, and expands remarkably at high temperatures in the direction perpendicular to the stratum due to dehydration, transforming it into a porous form that extends in the manner of a leech. Consequently, as it has superior heat insulating properties and sound absorption properties, it is frequently used as a material blended into base materials (filler, thickener), and as a base material for various construction materials including heat insulating materials and soundproofing materials, for the additional purpose of reducing weight. On the other hand, as the moisture absorption ability of vermiculite is not very high, its use as a moisture conditioner has not been considered at all.

Thus, in the case of blending vermiculite into construction materials as described above, expanded vermiculite is normally used for the purpose of reducing weight and so forth. For example, it is used as a lightweight aggregate in cement products such as mortar and concrete. In contrast, as non-expanded vermiculite does not offer advantages such as reducing weight as described above, small amounts on the order of several percent are only blended into base materials for special purposes to take advantage of its acid resistance, alkali resistance and other properties. In addition, although attempts have been made to use boards made substantially of non-expanded vermiculite for the prevention of the spreading of fires by fastening it to back sides of interior walls and allowing it to expand when a fire occurs, the vermiculite in this case is used as a specific base material which utilizes its fire resistance.

On the other hand, the imparting of various functions has been proposed for construction materials themselves for the purpose of distinguishing them from competitive products. Among these, although various studies have been conducted on construction materials provided with moisture conditioning (moisture absorption and release) and/or deodorizing and an attractive appearance, satisfactory results have yet to be found. Namely, although certain results are obtained by using construction materials having a large specific surface area, there are many cases in which water retention and moisture retention capabilities are excessively powerful causing problems in the rate of moisture release.
(A) Therefore, the inventors of the present invention conducted various studies to find a construction material that allows even more effective use of vermiculite as a natural resource, is able to satisfy the requirements of moisture conditioning and/or deodorizing and an attractive appearance, and offers a particularly superior balance between the amount and rates of moisture absorption and release.
   As a result, it was unexpectedly found that by blending 5-70 wt% of non-expanded vermiculite into a base material, and particularly, a hydraulic material having moisture absorption but inadequate moisture release, moisture absorption and release capabilities are remarkably improved and the above problems can be solved, thereby leading to completion of the present invention.
(B) The object of the present invention is to provide a construction material composition that is able to yield a construction material having more improved design, sound absorption and low weight properties as a part of these studies.
(C) As a result of conducting additional studies as a part of these studies for the purpose of improving productivity in the case of using this non-expanded vermiculite, it was unexpectedly found that, together with having a superior balance between the amount and rate of moisture absorption and release by using a specific amount of fine powder, improvements are also obtained in bending strength, flexibility and productivity, and improvements are obtained bending strength, flexibility and productivity even if the blended amount of non-expanded vermiculite is less than 5 wt%, thereby leading to completion of the present invention.
(D) As a result of conducting still more studies as a part of these studies, it was unexpectedly found that the above problems can also be solved by applying a coating composition containing non-expanded vermiculite to construction materials and so forth, thereby leading to completion of the present invention.
(E) Additionally, as a part of these studies, the present invention does not place an excess burden on recovery and disposal in the case where these construction materials have been used and become waste construction materials, thereby promoting their effective utilization.
(F) In the past, compound construction materials such as calcium silicate, gypsum board and allophane baked board were widely used as interior materials. However, as the use of fasteners was difficult from the standpoint of joining strength when these materials were joined, adhesives were typically used instead. However, the use of adhesive makes the joining work bothersome and, as high molecular weight monomers and solvents that compose the adhesives are released, the use of adhesives is not favorable in residential spaces. Moreover, the service life of these interior materials is shortened by deterioration of the adhesive.

On the other hand, when manufacturing construction materials, base materials are selected for various purposes, and various materials are frequently blended into these base materials.

As a part of the above study of construction materials, the object of the present invention is to obtain construction materials that can be joined using fasteners instead of adhesives, and it was unexpectedly found the above object can be achieved by using construction materials that contain the above-mentioned non-expanded vermiculite.

### DISCLOSURE OF THE INVENTION

### I. The following provides an explanation of the means for solving the object of the present invention described in (A) above.

Namely, the gist of the present invention is a construction material composition comprising the blending of non-expanded vermiculite into a base material, the blended amount being 5-70 wt% of the total composition (solid portion), a construction material formed therewith, and their production methods.

Although there are no particular restrictions on the base material used in the present invention provided it does not cause any substantial deterioration of the properties of vermiculite to be described later, from the viewpoints of moisture conditioning and/or deodorizing, it is preferably hydrophilic. This is because a hydrophilic base material itself has moisture conditioning and/or deodorizing functions, and internally dispersed substances can be adsorbed by non-expanded vermiculite on its surface. Examples of such hydrophilic base materials include gypsum, cement, calcium silicate, slag gypsum or their analogs. These can also be suitably used in combination. The gypsum may be either an anhydrous or hydrate salt, and various types of cement can be used, including Portland cement. In this case, an aggregate and admixture are used. In addition, although there are no particular restrictions on the calcium silicate, that which is obtained by hydrothermically reacting a siliceous raw material and lime in an autoclave (tobemorite or xonotlite) is used most commonly. Slag gypsum typically contains 20-40% blast furnace water-granulated slag powder, and is mixed with 60-80% gypsum dihydrate (flue gas desulfurized gypsum) and 1-5% Portland cement.

On the other hand, in the present invention, the vermiculite blended into the above base material is a flake-like mineral having for its main component SiO₂, MgO and Al₂O₃, may typically be either a biotite system or chlorite system, and can be used even if there are differences in composition and so forth depending on the origin. The specific surface area (nitrogen adsorption method) is normally 10 m²/g or less. Although there are no particular restrictions on particle size, it is normally 5 mm or less, preferably 3 mm or less and particularly preferably 0.5 mm or less. For example, although fine granular products having a particle size of 0.25 mm or less are treated as non-standard products due to tailing because they are not suitable for applications of expanded vermiculite, as it was unexpectedly determined that fine particles cause less dehydration deterioration of the interlayer moisture of vermiculite (in which the bimolecular layer of water between layers changes to a monomolecular layer) during crushing, dressing, drying and sorting of the ore, they are conversely used preferably in the present invention. This is because a bimolecular layer of interlayer water is preferable for moisture conditioning and deodorizing properties.

In the present invention, this vermiculite is used in the substantially non-expanded state. Namely, the vermiculite normally contains about 10-20% water, and expands considerably (the majority expand to 10-30 times their original thickness in 1-2 seconds at 1000°C) as a result of dehydration due to rapid heating at high temperatures (from about 320°C to 1000°C when the interlayer water begins to dissociate). Thus, vermiculite that substantially allows the obtaining of this degree of expansion is used in the present invention.

Moreover, vermiculite that has been subjected to activation treatment prior to blending into the base material is preferably used in the present invention. The purpose of activation treatment is to dissociate any organic or inorganic substances adhered to the vermiculite to recompose and restore its inherent moisture conditioning and adsorption performance. Although examples of activation treatment include high pressure stream treatment and salt water boiling treatment, activation treatment can preferably be carried out by steam treatment at the saturated vapor pressure and 105-200°C.

In addition, in the case in which the base material is a calcium silicate system in particular, even if vermiculite not subjected to activation treatment is blended prior to the hydrothermic reaction, since it is subsequently subjected to autoclaving treatment at, for example, the saturated steam pressure and 150-200°C, it ultimately ends up being activated.

Blending of vermiculite into the base material is carried out such that the blended amount is 5-70 wt%, and preferably 10-50 wt%, of the total composition (solid portion). Although selected according to the type of base material and degree of moisture conditioning and other aspects of performance of the target construction material, at least 15 wt% is typically particularly preferable for forming adequate vermiculite channeling (network) in order to obtain the preferable amount and rate of moisture absorption and release.

In addition to the above non-expanded vermiculite, various blended materials uniquely used in the respective base materials of construction materials for other purposes may also be suitably blended into the construction material composition of the present invention. The types and blended amounts of these blended materials can be in accordance with routine methods. Examples of blended materials that are suitably selected include pulp, cellulose fiber, glass fiber, fumed silica, foam glass, shirasu balloons, alumina balloons, pearlite, wallastonite, sepiolite, gravel, sand and organic binder.

The resulting construction material composition of the present invention can be formed into construction materials such as boards of a desired shape and size in accordance with routine methods such as sheet molding, extrusion molding, press molding and casting. In general, in the case of boards, sheet molding using a so-called sheet forming machine is selected industrially.

The construction material of the present invention preferably demonstrates moisture absorption and release rates in the case of changing the relative humidity from 60-90% in the moisture absorption and release test, described in Reference Example 1 described later, of 90% or more of the equilibrium value in 30 minutes for moisture absorption, and equilibrium in 25 minutes or less, and preferably 20 minutes or less, for moisture release.

Although a construction material obtained in this manner is suitable for use as a wall material, ceiling material, divider material or other interior material, is can also be used as eaves and roof material or other exterior material.

The construction material of the present invention is able to satisfy requirements for moisture conditioning and/or deodorizing and an attractive appearance. In other words, the construction material of the present invention is characterized as follows:
1. The construction material of the present invention has a superior moisture conditioning function as a result of having suitable moisture release characteristics. For example, the balance, amount and rate of moisture absorption and moisture release are all superior. Thus, it is capable of preventing condensation of moisture, warping and so forth, while also effectively suppressing the growth of mold, mites and so forth.
2. The construction material of the present invention has a superior deodorizing function. For example, the construction material of the present invention is able to adsorb volatile chemical substances or odorous gases such as formaldehyde, toluene and xylene.
3. Moreover, the construction material of the present invention can be made to have a granite-like surface by embossing non-expanded vermiculite particles by surface polishing and so forth, thereby making it possible to easily provide boards and so forth provided with an attractive appearance.
4. Products having undergone autoclaving treatment in the production process can be recycled by recovering the used construction material of the present invention and subjecting it directly to steam treatment in an autoclave at about 105-150°C, This is because the vermiculite does not react with the above base materials.
5. Since non-standard fine grain articles can be conversely used preferably as raw materials for the non-expanded vermiculite, resources can be utilized effectively.

### II. The following provides an explanation of the means for solving the object of the present invention described in (B) above.

This object is achieved by a construction material composition and a construction material formed therewith comprising a construction material composition consisting of blending non-expanded vermiculite into a base material such that the blended amount is 5-70 wt% of the total composition (solid portion); wherein, non-expanded vermiculite is also blended at an amount in which expanded vermiculite is blended at an amount of 2.5-20 wt% of the total composition (solid portion).

Although there are no particular restrictions on the base material used in the present invention provided it does not substantially deteriorate the properties of the vermiculite in the same manner as that described in I above, it is preferably hydrophilic from the viewpoint of moisture conditioning and/or deodorizing.

On the other hand, the vermiculite blended into the above base material in the present invention is as was explained in I above.

In the present invention, this vermiculite is used substantially in the non-expanded state. Namely, the vermiculite normally contains 10-20% water, and expands considerably (the large part expands to 10-30 times its original thickness in 1-2 seconds at 1000°C) as a result of dehydration due to rapid heating at high temperatures (from about 320°C to 1000°C when the interlayer water begins to dissociate). Thus, vermiculite that substantially allows this degree of expansion is used in the present invention.

Blending of vermiculite into the base material is carried out such that the blended amount is 5-70 wt%, and preferably 10-50 wt%, of the total composition (solid portion). Although selected according to the type of base material and degree of moisture conditioning and other aspects of performance of the target construction material, at least 15 wt% is typically particularly preferable for forming adequate vermiculite channeling (network) in order to obtain the preferable amount and rate of moisture absorption and release.

In addition to the above non-expanded vermiculite, it is also necessary to blend expanded vermiculite into the construction material composition of the present invention at an amount of 2.5-20 wt% of the total composition (solid portion). When blending the expanded vermiculite, the blended amount can be suitably selected according to the target design and light weight properties. In addition, although there are no particular restrictions on the particle size, it is normally selected from particle sizes of about 0.5-30 mm.

In the present invention, the combined use of this expanded vermiculite makes it possible to impart light weight and various designs to the construction material obtained from this construction material composition, and in other words, makes it possible to impart a flaky surface having a sense of transparency.

Moreover, various blended materials uniquely used in the respective base materials of construction materials for other purposes can also be suitably blended into the construction material composition of the present invention. The types and blended amounts of these blended materials can be in accordance with routine methods. Examples of blended materials that are suitably selected include aggregates, reinforcing materials, admixtures and weight reducing materials, and more specifically, pulp, cellulose fiber, glass fiber, fumed silica, foam glass, "shirasu" (sedimentary silica) balloons, alumina balloons, pearlite, wallastonite, sepiolite, gravel, sand and organic binder.

The resulting construction material composition of the present invention can be formed into construction materials, such as boards of a desired shape and size, in accordance with routine methods such as sheet molding, extrusion molding, press molding and casting. In general, in the case of boards, sheet molding using a so-called sheet forming machine is selected industrially.

The construction material of the present invention preferably demonstrates moisture absorption and release rates in the case of changing the relative humidity from 60-90% in the moisture absorption and release test described in Reference Example 1 described later of 90% or more of the equilibrium value in 30 minutes for moisture absorption, and equilibrium in 25 minutes or less, and preferably 20 minutes or less, for moisture release.

Although a construction material obtained in this manner is suitable for use as a wall material, ceiling material, divider material or other interior material, it can also be used as eaves and roof material or other exterior material.

In addition to the above light weight and diverse design properties, the construction material of the present invention is able to satisfy requirements for moisture conditioning and/or deodorizing and an attractive appearance as previously described.

### III. The following provides an explanation of the means for solving the object of the present invention described in (C) above.

Namely, the gist of the present invention is a construction material composition comprising a blend of non-expanded vermiculite in a base material, the blended amount being 0.5-70 wt% of the total composition (solid portion); wherein, the portion of the non-expanded vermiculite that is 300 µm or less is 0.5-15 wt% of the total composition (solid portion), a construction material formed therewith, and their production methods.

Although there are no particular restrictions on the base material used in the present invention provided it does not substantially deteriorate the properties of the vermiculite in the same manner as that described in I above, it is preferably hydrophilic from the viewpoint of moisture conditioning and/or deodorizing.

On the other hand, the vermiculite blended into the above base material in the present invention is as was explained in I above.

In the present invention, the vermiculite is used substantially in the non-expanded state. Namely, the vermiculite normally contains 10-20% water, and expands considerably (the large part expands to 10-30 times the original thickness in 1-2 seconds at 1000°C) as a result of dehydration due to rapid heating at high temperatures (from about 320°C to 1000°C when the interlayer water begins to dissociate). Thus, vermiculite that substantially allows this degree of expansion is used in the present invention.

The non-expanded vermiculite is blended into the base material in an amount in which the portion of the non-expanded vermiculite that is 300 µm or less is 0.5-15 wt% of the total composition (solid portion) in a construction material composition in which the blended amount of non-expanded vermiculite is 0.5-70 wt% of the total composition (solid portion). In this case, although this composition can be obtained by blending a plurality of types of non-expanded vermiculite having different contents of portions of 300 µm or less, for example, non-expanded vermiculite fine powder of which 90% or more is 300 µm or less can also be blended into a base material such that the portion of 300 µm or less is 0.5-15 wt%, 0.5-10 wt% or 1-5 wt% of the total composition (solid portion).

If the amount of non-expanded vermiculite fine powder that is 300 µm or less is less than 0.5 wt%, the effects of the present invention cannot be obtained, while if the amount exceeds 15 wt%, improvement of bending strength, which is the main object of the present invention, reaches a maximum and then decreases.

Blending of vermiculite into the base material is carried out such that the blended amount is 0.5-70 wt% of the total composition (solid portion). Although selected according to the type of base material and degree of moisture conditioning and other aspects of performance of the target construction material, 5-70 wt%, preferably 10-50 wt%, and at least 15 wt% is typically particularly preferable for forming adequate vermiculite channeling (networks) in order to obtain the most preferable amount and rate of moisture absorption and release.

On the other hand, in the case of making the main object of the present invention improving the bending strength, flexibility and productivity of calcium silicate-based construction materials instead of making the main object moisture conditioning, vermiculite is preferably blended into the base material in an amount of 0.5-15 wt%, preferably 0.5-10 wt%, and more preferably 1-5 wt%.

In the present invention, as the vermiculite easily and uniformly disperses in water during mixing in a molding tank and so forth as a result of blending in fine particles of non-expanded vermiculite, production efficiency and yield can be improved, resources that had been discarded due to unsuitability for expanding uses can be used effectively, and a contribution to the bending strength of calcium silicate-based construction materials can be realized even if blended at 0.5-5 wt%. In this case, it is preferable to use non-expanded vermiculite fine powder of which 90% or more is 300 µm or less. The blended non-expanded vermiculite fine powder serves as the nuclei of epitaxial growth of tobemorite, promotes the growth of calcium silicate hydration reaction products, and brings about an improvement in bending strength and flexibility (decreased elastic modulus) as a result of lowering the content of unreacted raw materials. Thus, construction materials can be obtained that have large breaking energy.

Various blended materials uniquely used in the respective base materials of construction materials for other purposes can also be suitably blended into the construction material composition of the present invention. The types and blended amounts of these blended materials can be in accordance with routine methods.

The resulting construction material composition of the present invention can be formed into construction materials such as boards of a desired shape and size in accordance with routine methods such as sheet molding, extrusion molding, press molding and casting. In general, in the case of boards, sheet molding using a so-called sheet molding machine is selected industrially.

In the case the blended amount of vermiculite is 5-70 wt% of the total composition (solid portion), the construction material of the present invention preferably demonstrates moisture absorption and release rates in the case of changing the relative humidity from 60-90% in the previously described moisture absorption and release test of 90% or more of the equilibrium value in 30 minutes for moisture absorption, and equilibrium in 25 minutes or less, and preferably 20 minutes or less, for moisture release.

Although a construction material obtained in this manner is suitable for use as a wall material, ceiling material, divider material or other interior material, is can also be used as eaves and roof material or other exterior material.

In the case the blended amount of vermiculite is 5-70 wt% of the total composition (solid portion), the construction material of the present invention is able to satisfy the requirements of moisture conditioning and/or deodorizing as well as an attractive appearance as previously mentioned.

Moreover, the breaking energy of the construction material of the present invention can also be improved as previously mentioned even in the case the blended amount of vermiculite is 0.5-5 wt% of the total composition (solid portion).

### IV. The following provides an explanation of the means for solving the object of the present invention described in (D) above.

The gist of the present invention is (1) a coating composition comprising (A) non-expanded vermiculite,
(2) a coating composition comprising non-expanded vermiculite, (B) organic binder and/or (C) inorganic binder,
(3) a coating composition comprising (A) non-expanded vermiculite, (B) organic binder and/or (C) inorganic binder and (D) a hygroscopic material in which the specific surface area as determined by BET is 10 m²/g or more, and
(4) a coated body comprising coating an article to be coated with these coating compositions.

The following provides a detailed explanation of the present invention. Although the present invention is a coating composition comprising non-expanded vermiculite (A), the vermiculite used in the present invention is the same as that described in I above.

In the present invention, this vermiculite is used substantially in the non-expanded state. Namely, the vermiculite normally contains 10-20% water, and expands considerably (the majority expand to 10-30 times their original thickness in 1-2 seconds at 1000°C) as a result of dehydration due to rapid heating at high temperatures (from about 320°C to 1000°C when the interlayer water begins to dissociate). Thus, vermiculite that substantially allows the obtaining of this degree of expansion is used in the present invention.

Although examples of organic binder used in the present invention include paint and/or paste, paints that are normally used for construction materials, architectural interiors and indoor fixtures and so forth can be used for the paint. For example, the paint can be suitably selected from resin or emulsion paints such as acrylic, urethane, epoxy, polyester, silicone, vinyl chloride, vinyl acetate, polyvinyl alcohol, polyvinyl butyral or styrene-butadiene-based paints according to the purpose. Namely, the paint can be arbitrarily selected by suitably considering the type, material and so forth of the article to be coated.

Examples of pastes include those based on alginates such as sodium alginate, starch such as wheat starch, mannan such as konjak paste, dextrin obtained by heat treatment of starch, protein such as casein, and methylcelluloses such as carboxymethylcellulose (CMC), hydroxypropylmethylcellulose and hydroxyethylmethylcellulose, while those of a natural origin are particularly preferable.

Moreover, examples of inorganic binder used in the present invention include cements such as Portland cement and white cement, hydraulic materials such as water granulated slag and hemihydrate gypsum, air hardening materials such as mortar, dolomite plaster and magnesium oxychloride, and sodium silicate, and can be suitably selected according to the purpose.

In the present invention, in the case of blending the above organic binder and/or inorganic binder into the non-expanded vermiculite, they are preferably blended at 5-70 wt% of non-expanded vermiculite (A) and 5-40 wt% of organic binder (B) and/or inorganic binder (C) relative to the total composition solid portion, and more preferably at 0-30 wt% organic binder and 0-40 wt% inorganic binder.

A coating composition in which the above organic binder and/or inorganic binder is blended into the non-expanded vermiculite satisfies the requirements of moisture conditioning and/or deodorizing as well as an attractive appearance when coated onto an article to be coated, and although it demonstrates superior balance between the amount and rate of moisture absorption and release, it is particularly preferable for applying construction materials or architectural interiors using said construction materials comprising the formation of a construction material composition in which the above non-expanded vermiculite is blended into a base material, and the blended amount is 5-70 wt% of the total composition (solid portion).

Moreover, in order to increase the moisture absorption of the coating composition itself in the present invention, a coating composition can be obtained in which a hygroscopic material (D) is added having a specific surface area as determined by BET of 10 m²/g or more. Examples of this hygroscopic material that are used preferably include calcium silicate, diatomaceous earth, zeolite and allophane. The blended amount of this hygroscopic material is such that it is preferably contained at 0-70 wt% relative to the total composition solid portion. This coating composition is able to widen the preferable application range of the article to be coated more so than a coating composition to which said hygroscopic material is not added with respect to enhancing moisture absorption.

Various components can additionally be blended into the coating composition of the present invention in addition to components (A) through (D) above according to the purpose. For example, aggregates such as silica sand and river sand, inorganic powders such as wallastonite, calcium carbonate and sepiolite, organic or inorganic fibers such as pulp and glass fiber, and so forth can be suitably used, and in the case of not blending in paint, some pigment components such as pigment and color developer can also be used. In addition, expanded vermiculite can also be blended to prevent running.

The coating composition of the present invention is coated onto articles to be coated in the form of construction materials, architectural interiors and indoor fixtures or their members. Preferable examples of construction materials include inorganic construction materials such as calcium silicate, cement, gypsum, diatomaceous earth, zeolite, allophane and slag gypsum, as well as wood-based construction materials such as particle board, and these are normally coated in a factory. In addition, examples of architectural interiors those that already compose a portion of the inner walls, ceilings, room dividers, doors and so forth of a building, and are normally coated at the construction site in the form of so-called architectural coating. Moreover, examples of indoor fixtures include those which are not substantially fixed to a building such as furniture and personal effects. The above members are members that compose a portion of the above architectural interiors or indoor fixtures. In addition, the article to be coated may be a joint or a repaired portion.

These can be applied in accordance with routine methods, typical examples of which include brush coating, roller brush coating and spray coating in the case of coating at the construction site, or blower coating and roller coating in the case of coating at a factory.

Although the film thickness of these articles to be coated varies according to the material, type and so forth of the article to be coated, it is normally selected from about 10 µm to 5 mm, and preferably from about 1 mm to 3 mm. In the case the article to be coated is a construction material comprising by forming a construction material composition in which the above non-expanded vermiculite is blended into a base material, and the blended amount is 5-70 wt% of the total composition (solid portion), an architectural interior using said construction material, or an indoor fixture, there is the advantage of the characteristics such as moisture conditioning of said article to be coated not inhibited even if the thickness of the coated film becomes quite large.

### V. The following provides an explanation of the means for solving the object of the present invention described in (E) above.

The gist of the present invention is a soil conversion method for waste construction materials comprising conversion of waste construction materials to soil by crushing waste construction materials comprised of a construction material that has been molded from a construction material composition comprised by blending non-expanded vermiculite into a calcium silicate-based base material.

The construction material in the present invention is a construction material that has been molded from a construction material composition comprising the blending of non-expanded vermiculite into a calcium silicate-based base material. Although there are no particular restrictions on the calcium silicate-based base material, that which is obtained by hydrothermally reacting a siliceous raw material and lime in an autoclave (tobemorite or xonotlite) is used most commonly.

On the other hand, the vermiculite blended into the above base material in the present invention is as described below.

Blending of vermiculite into the base material is carried out such that the blended amount is 5-70 wt%, and preferably 10-50 wt%, of the total composition (solid portion). Although selected according to the type of base material and degree of moisture conditioning and other aspects of performance of the target construction material, at least 15 wt% is typically particularly preferable for forming adequate vermiculite channeling (networks) in order to obtain the preferable amount and rate of moisture absorption and release.

Various blended materials uniquely used in the base material calcium silicate of construction materials for other purposes can also be suitably blended into the construction material composition of the present invention in addition to the above non-expanded vermiculite. Expanded vermiculite, for example, may be contained. The types and blended amounts of these blended materials can be in accordance with routine methods.

The resulting construction material composition of the present invention can be formed into construction materials such as boards of a desired shape and size in accordance with routine methods such as sheet molding, extrusion molding, press molding and casting. In general, in the case of boards, sheet molding using a so-called sheet molding machine is selected industrially.

The construction material of the present invention preferably demonstrates moisture absorption and release rates in the case of changing the relative humidity from 60-90% in the previously described moisture absorption and release test of 90% or more of the equilibrium value in 30 minutes for moisture absorption, and equilibrium in 25 minutes or less, and preferably 20 minutes or less, for moisture release.

Although a construction material obtained in this manner is suitable for use as a wall material, ceiling material, divider material or other interior material, it can also be used as eaves and roof material or other exterior material.

The construction material of the present invention is able to satisfy the requirements of moisture conditioning and/or deodorizing as well as an attractive appearance as previously mentioned.

The method of the present invention allows waste construction materials to be converted to soil in the case such construction materials have become waste construction materials without being recycled into construction materials after they have been used.

To begin with, although the waste construction material is first crushed, this crushing can be in accordance with a typical crushing means such as an ordinary crusher. During crushing, the crushing means is selected in consideration of the amount of waste construction material, crushing location and so forth. Crushing treatment can also be carried out by carrying in a crushing means to the location where the waste materials are generated.

Although there are no particular restrictions on the degree of crushing, it is suitably selected according to the target soil application, and crushing is most commonly performed, for example, to about 5 mm or less.

Moreover, boiling or steam treatment at about 100-200°C in an autoclave can also be performed before or after the above crushing as necessary to remove adhered substances and so forth that have the potential of being contained in the waste construction material.

The waste construction material crushed and treated in this manner can be used as soil. Namely, the artificial soil having good drainage obtained in the present invention can be used for purposes including plant growth, soil improvement and foundation improvement. Although this artificial soil fulfills the role of a silicic acid fertilizer as is, other components can be added according to the respective purpose. For example, various types of fertilizer components selected from N, P, K and trace elements, etc. can be added.

### VI. The following provides an explanation of the means for solving the object of the present invention described in (F) above.

Namely, the gist of the present invention is a construction material comprising joining with a fastener a construction material comprised by molding a construction composition comprising the blending of non-expanded vermiculite into a base material, and that blended amount being 5-70 wt% of the total composition (solid portion).

Although the base material used in the present invention is as was previously described in I and is not subject to any particular restrictions provided it does not cause any substantial deterioration of the properties of vermiculite, from the viewpoints of moisture conditioning and/or deodorizing, it is preferably hydrophilic.

On the other hand, in the present invention, the vermiculite blended into the above base material is as was previously described.

In the present invention, this vermiculite is used substantially in the non-expanded state. Namely, the vermiculite normally contains about 10-20% water, and expands considerably (the majority expand to 10-30 times their original thickness in 1-2 seconds at 1000°C) as a result of dehydration due to rapid heating at high temperatures (from about 320°C to 1000°C when the interlayer water begins to dissociate). Thus, vermiculite that substantially allows this degree of expansion is used in the present invention.

Blending of vermiculite into the base material is carried out such that the blended amount is 5-70 wt%, and preferably 10-50 wt%, of the total composition (solid portion). Although selected according to the type of base material and degree of moisture conditioning and other aspects of performance of the target construction material, at least 15 wt% is typically particularly preferable for forming adequate vermiculite channeling (networks) in order to obtain the preferable amount and rate of moisture absorption and release.

In addition to the above non-expanded vermiculite, various blended materials uniquely used in the respective base materials of construction materials for other purposes may also be suitably blended into the construction material composition of the present invention.

The resulting construction material composition of the present invention can be formed into construction materials such as boards of a desired shape and size in accordance with routine methods such as sheet molding, extrusion molding, press molding and casting. In general, in the case of boards, sheet molding using a so-called sheet molding machine is selected industrially.

The construction material of the present invention preferably demonstrates moisture absorption and release rates in the case of changing the relative humidity from 60-90% in the previously described moisture absorption and release test of 90% or more of the equilibrium value in 30 minutes for moisture absorption, and equilibrium in 25 minutes or less, and preferably 20 minutes or less, for moisture release.

Although a construction material obtained in this manner is suitable for use as a wall material, ceiling material, divider material or other interior material, it can also be used as eaves and roof material or other exterior material.

The construction material of the present invention is able to satisfy requirements for moisture conditioning and/or deodorizing and an attractive appearance.

In the present invention, a construction material obtained in this manner is joined with a fastener. Joining is typically carried out between two construction materials or between a construction material and another member or structural unit and so forth. Examples of fasteners that are used preferably include nails, machine screws, bolts and nuts, tacks, staples and pins. These are suitably selected according to the purpose of joining. There are no particular restrictions on the materials of these fasteners, and any material may be used, examples of which include metal, wood, bamboo, plastic and ceramic. The nails may be either Western style nails or Japanese style nails, examples of which include flat head, flat, square and round head nails. Examples of machine screws include round head, semi-round, flat head and cross-recessed head machine screws, while the bolts and nuts are typically hexagon socket head bolts. Examples of pins include fine small, ridged small, flat small, flat and round pins.

At the time of joining, as the construction material according to the present invention has so-called grip strength that is surmised to originate in the spring back action produced by the non-expanded vermiculite, it may be present on the joining side or the joined side. Examples of use on the joined side include paintings, lights, railings and towel hangers. As the site at which it is joined with a fastener has ample recovery, it can re-fastened to the same site even after, for example, the screws have come out.

Moreover, as the construction material according to the present invention has satisfactory flexibility, no planar resistance and shape retention, even if its surface is shaved with a plane, the surface is not damaged and a smooth surface can be formed without the generation of fine shavings. Since the construction material according to the present invention does not require the affixing of a finishing material such as cloth or wall paper, thereby offering the additional advantage of not requiring the use of adhesive for that purpose in this case.

Moreover, as the surface of the construction material according to the present invention has ample carving ease and allows processing by a router or engraver, it allows the obtaining of a desired design, and is able to arbitrarily enhance the design quality of the construction material by imparting trim, geometrical patterns and so forth.

These construction materials that are shaved with a plane or carved in the present invention can naturally also be joined with fasteners as described above.

### BEST MODE FOR CARRYING OUT THE INVENTION

Embodiments 1 through 5 described below solve the problems described in the above-mentioned (A).

Next, although the following provides a more detailed explanation of the present invention through its embodiments, the present invention is not limited by these embodiments. The term "parts" is hereinafter used to represent "parts by weight".

### Embodiment 1

Using for the starting raw material 27 parts of quartzite powder as the siliceous raw material, 27 parts of calcium hydroxide as the calcareous raw material, 6 parts of pulp as reinforcing fiber and 40 parts of non-expanded vermiculite (origin: South Africa, particle size: 0.25-0.5 mm), water was added to this starting raw material followed by mixing to form a slurry having a solid portion of about 12%, and after forming a crude sheet using a sheet molding machine, the sheet was pressure cured in an autoclave (160-180°C for about 10 hours) and then dried to the prescribed moisture content at under 80°C to obtain a calcium silicate board (30 cm x 30 cm x 6 mm).

### Embodiment 2

A calcium silicate board was obtained in the same manner as Embodiment 1 using 42 parts of quartzite powder, 42 parts of calcium hydroxide, 6 parts of pulp and 10 parts of non-expanded vermiculite.

### Embodiment 3

Water was added to 16 parts of slag powder, 38 parts of flue gas desulfurized gypsum powder, 6 parts of pulp and 40 parts of non-expanded vermiculite followed by mixing to form a slurry having a solid portion of about 12%. Next, after forming a crude sheet using a sheet molding machine, the sheet was steam cured for about 12 hours at about 80°C and then dried at under 80°C to obtain a slag gypsum board (30 cm x 30 cm x 6 mm).

### Embodiment 4

60 parts of hemihydrate gypsum, 40 parts of non-expanded vermiculite and 24 parts of water were mixed, and the resulting mixture was cast molded in a prescribed mold into the shape of a board, followed by curing at normal temperature and drying at under 80°C to obtain a gypsum board (30 cm x 30 cm x 6 mm).

### Reference Example 1

### (Moisture Absorption and Release Test)

The coefficient of moisture absorption and moisture absorption and release rates of construction materials of the present invention and commercially available construction materials were measured according to the measurement method described below.

### (1) Measurement Method/Instrument

Measurement instrument: "IGA SORP", Hiden Analytical Ltd.

### Measurement method:

Powdered samples were placed directly in an approximately 1 cc measuring basket, while bulk samples were placed in the measurement basket after being adjusted to about 2-3 mm.

### Measured parameters:

Coefficient of moisture absorption at relative humidity of 0-90% Coefficient of moisture absorption at relative humidity of 60-90%

Moisture absorption rate from relative humidity of 60% to relative humidity of 90% Moisture release rate from relative humidity of 90% to relative humidity of 60%

Moisture absorption and release rates were repeatedly tested based on a 30 minute cycle.

### (2) Measured Samples

Present invention: The following boards obtained in Embodiments 1 through 4 were used.
Embodiment 1: Calcium silicate board containing 40 wt% non-expanded vermiculite
Embodiment 2: Calcium silicate board containing 10 wt% non-expanded vermiculite
Embodiment 3: Slag gypsum board containing 40 wt% non-expanded vermiculite
Embodiment 4: Gypsum board containing 40 wt% non-expanded vermiculite

Comparative articles: The following articles of A-H were used.
A: Allophane baked board (commercial product)
B: Allophane (origin: Tochigi prefecture, Japan)
C: Slag gypsum board containing 30 wt% zeolite (commercial product)
D: Zeolite (origin: Miyagi prefecture, Japan)
E: Calcium silicate board containing 40 wt% diatomaceous earth (commercial product)
F: Diatomaceous earth (origin: Akita prefecture, Japan)
G: Calcium silicate board containing 40 wt% expanded vermiculite (obtained in the same manner as Embodiment
   1 with the exception of using expanding vermiculite)
H: Calcium silicate board (obtained by using 47 parts of quartzite, 47 parts of calcium hydroxide and 6 parts of pulp in Embodiment 1)

### (3) Measurement results are shown in Table 1.

**Table 1**

| | Coefficient of moisture absorption (%) (0-90%) | Coefficient of moisture absorption (%) (60-90%) | Moisture absorption rate (60→90%) | Moisture release rate (90→60%) |
|---|---|---|---|---|
| Emb. 1 | 7.5 | 4.4 | Near equilibrium in 30 minutes | Equilibrium in 15 minutes |
| Emb. 2 | 7.3 | 4.3 | 95% in 30 minutes | Equilibrium in 25 minutes |
| Emb. 3 | 7.5 | 4 | Near equilibrium in 30 minutes | Equilibrium in 20 minutes |
| Emb. 4 | 2.5 | 2.2 | Near equilibrium in 30 minutes | Equilibrium in 10 minutes |
| Comp. Art. A | 3.4 | 2.8 | 85$in 30 minutes | Equilibrium in 30 minutes |
| Comp. Art. B | 29 | 14 | 75% in 30 minutes | 60% in 30 minutes |
| Comp. Art. C | 8.3 | 4.1 | 75% in 30 minutes | Equilibrium in 30 minutes |
| Comp. Art. D | 8.2 | 3.6 | 95% in 30 minutes | Equilibrium in 15 minutes |
| Comp. Art. E | 18 | 12 | 70% in 30 minutes | 55% in 30 minutes |
| Comp. Art. F | 8.9 | 6.1 | 80% in 30 minutes | Equilibrium in 18 minutes |
| Comp. Art. G | 6.5 | 3.7 | 95% in 30 minutes | Equilibrium in 11 minutes |
| Comp. Art. H | 7.3 | 4.6 | 80% in 30 minutes | Equilibrium in 30 minutes |

These results indicate that the construction material of the present invention exhibits superior balance between the amounts and rates of moisture absorption and release characteristics. As a result of testing moisture absorption and moisture release at 30 minute cycles, in the construction material of the present invention, although the baseline during moisture release was maintained constant due to the satisfactory balance between moisture absorption and release, in the comparative articles however, the baseline tended to shift upward on the right side over time as a result of moisture release being unable to keep up with moisture absorption. It was also determined from these findings that the construction material of the present invention is resistant to the condensation of moisture.

### Reference Example 2

Vermiculite was treated in an autoclave at 180°C to observe the effects of steam treatment on moisture absorption and release characteristics. Those results are shown in Table 2.

**Table 2**

| | Coefficient of moisture absorption (%) (0-90%) | Coefficient of moisture absorption (%) (60-90%) | Moisture absorption rate (60→90%) | Moisture release rate (90→60%) |
|---|---|---|---|---|
| Non-expanding/ autoclave treatment: yes | 6.4 | 1.4 | Equilibrium in 30 minutes | Equilibrium in 7 minutes |
| Expanding/ autoclaving treatment: yes | 5.7 | 1.9 | 95% in 30 minutes | Equilibrium in 11 minutes |
| Non-expanding/ autoclaving treatment: no | 5.1 | 1.2 | Equilibrium in 30 minutes | Equilibrium in 7 minutes |
| Expanding/ autoclaving treatment: no | 4.5 | 1.6 | Equilibrium in 30 minutes | Equilibrium in 8 minutes |

### Embodiment 5

Water was added to 27 parts of quartzite powder, 33 parts of calcium hydroxide and 40 parts of non-expanded vermiculite followed by mixing to form a slurry having a solid portion of about 12%, and this slurry was then pressure cured in an autoclave (190-200° for about 10 minutes). Next, this was then dried to the prescribed moisture content to obtain a xonotlite-based calcium silicate board.

According to the moisture absorption and release test measured in accordance with the method described in Reference Example 1, the amount of moisture absorption was slightly smaller while the rate of moisture release was slightly greater as compared with the calcium silicate of Embodiment 1.

Embodiments 6 through 10 described below solve the problems described in the above-mentioned (B).

### Embodiment 6

Using for the starting raw material 27 parts of quartzite powder as the siliceous raw material, 27 parts of calcium hydroxide as the calcareous raw material, 5 parts of expanded vermiculite, 6 parts of pulp as reinforcing fiber and 40 parts of non-expanded vermiculite (origin: South Africa, particle size: 0.25-0.5 mm), water was added to this starting raw material followed by mixing to form a slurry having a solid portion of about 12%, and after forming a crude sheet using a sheet molding machine, the sheet was pressure cured in an autoclave (160-180°C for about 10 hours) and then dried to the prescribed moisture content at under 80°C to obtain a calcium silicate board (30 cm x 30 cm x 6 mm).

### Embodiment 7

A calcium silicate board was obtained in the same manner as Embodiment 6 using 40 parts of quartzite powder, 40 parts of calcium hydroxide, 6 parts of pulp, 4 parts of expanded vermiculite and 10 parts of non-expanded vermiculite.

### Embodiment 8

Water was added to 16 parts of slag powder, 38 parts of flue gas desulfurized gypsum powder, 6 parts of pulp, 4 parts of expanded vermiculite and 40 parts of non-expanded vermiculite followed by mixing to form a slurry having a solid portion of about 12%. Next, after forming a crude sheet using a sheet molding machine, the sheet was steam cured for about 12 hours at about 80°C and then dried at under 80°C to obtain a slag gypsum board (30 cm x 30 cm x 6 mm).

### Embodiment 9

60 parts of hemihydrate gypsum, 36 parts of non-expanded vermiculite, 4 parts of expanded vermiculite and 24 parts of water were mixed, and the resulting mixture was cast molded in a prescribed mold into the shape of a board, followed by curing at normal temperature and drying at under 80°C to obtain a gypsum board (30 cm x 30 cm x 6 mm).

### Example 10

Water was added to 27 parts of quartzite powder, 33 parts of calcium hydroxide, 5 parts of expanded vermiculite and 40 parts of non-expanded vermiculite followed by mixing to form a slurry having a solid portion of about 12%, after which this was pressure cured in an autoclave (190-200°C for about 10 hours). Next, it was dried to the prescribed moisture content at under 80°C to obtain a xonotlite-based calcium silicate board.

According to the moisture absorption and release test, the amount of moisture absorption was slightly less while the rate of moisture release was slightly higher than the calcium silicate of Example 6.

The construction materials obtained according to Embodiments 6 through 10 all exhibited improved moisture conditioning along with improved design quality, sound absorption properties and handling, and had a flaky surface having a sense of transparency.

Embodiments 11 through 14 described below solve the problems described in the above-mentioned (C).

### Embodiment 11

Using for the starting raw material 27 parts of quartzite powder as the siliceous raw material, 27 parts of calcium hydroxide as the calcareous raw material, 6 parts of pulp as reinforcing fiber and 40 parts of non-expanded vermiculite (origin: South Africa, portion of 300 µm or less equal to about 5.0 wt% of the entire composition (solid portion)), water was added to this starting raw material followed by mixing to form a slurry having a solid portion of about 12%, and after forming a crude sheet using a sheet molding machine, the sheet was pressure cured in an autoclave (160-180°C for about 10 hours) and then dried to the prescribed moisture content at under 80°C to obtain a calcium silicate board (30 cm x 30 cm x 6 mm). In the present embodiment, as a result of blending a fine powder of non-expanded vermiculite, the vermiculite easily dispersed uniformly in the water during mixing, resulting in improved production efficiency and yield.

### Embodiment 12

A calcium silicate board was obtained in the same manner as Embodiment 11 using 42 parts of quartzite powder, 42 parts of calcium hydroxide, 6 parts of pulp and 10 parts of non-expanded vermiculite fine powder of which 90% or more was 300 µm or less.

### Embodiment 13

Water was added to 16 parts of slag powder, 38 parts of flue gas desulfurized gypsum powder, 6 parts of pulp and 40 parts of non-expanded vermiculite (portion of 300 µm or less equal to about 5.0 wt% of the entire composition (solid portion)) followed by mixing to form a slurry having a solid portion of about 12%. Next, after forming a crude sheet using a sheet molding machine, the sheet was steam cured for about 12 hours at about 80°C and then dried at under 80°C to obtain a slag gypsum board (30 cm x 30 cm x 6 mm).

### Embodiment 14

Using for the starting raw material 30 parts and 10 parts, respectively, of quartzite powder and diatomaceous earth as the siliceous raw material, 40 parts of calcium hydroxide as the calcareous raw material, 6 parts of pulp as reinforcing fiber, 10 parts of calcium carbonate as a dimensional stabilizer, and 4 parts of non-expanded vermiculite fine powder of which 90% or more was 300 µm or less (origin: South Africa), water was added to this starting raw material followed by mixing to form a slurry having a solid portion of about 12%, and after forming a crude sheet using a sheet molding machine, the sheet was pressure cured in an autoclave (160-180°C for about 10 hours) and then dried to the prescribed moisture content at under 80°C to obtain a calcium silicate board (30 cm x 30 cm x 6 mm). The physical properties of the board were as follows: bending strength: 13.1 N/mm², Young's modulus: 5.7 kN/mm², bulk density: 0.75.

### Comparative Example 1

A calcium silicate board (30 cm x 30 cm x 6 mm) was obtained in the same manner as Embodiment 14 with the exception of not using non-expanded vermiculite. The physical properties of the board were as follows: bending strength: 11.6 N/mm², Young's modulus: 6.9 kN/mm², bulk density: 0.75.

Embodiments 15 through 21 described below solve the problems described in the above-mentioned (D).

### Reference Example 2 Production of Calcium Silicate Board Containing Non-expanded vermiculite

Using for the starting raw material 27 parts of quartzite powder as the siliceous raw material, 27 parts of calcium hydroxide as the calcareous raw material, 6 parts of pulp as reinforcing fiber and 40 parts of non-expanded vermiculite (origin: South Africa, particle size: 0.25-0.5 mm), water was added to this starting raw material followed by mixing to form a slurry having a solid portion of about 12%, and after forming a crude sheet using a sheet molding machine, the sheet was pressure cured in an autoclave (160-180°C for about 10 hours) and then dried to the prescribed moisture content at under 80°C to obtain a calcium silicate board containing non-expanded vermiculite (30 cm x 30 cm x 6 mm).

### Reference Example 3

A calcium silicate board was obtained in the same manner as Reference Example 2 using as starting raw material 47 parts of quartzite powder as the siliceous raw material, 47 parts of calcium hydroxide as the calcareous raw material and 6 parts of pulp as reinforcing fiber.

### Embodiment 15

A coating composition was prepared having the composition indicated below.

### Composition: (A) 65 wt% non-expanded vermiculite/ (B) 35 wt% acrylic emulsion coating

A coating composition was obtained by mixing using a Hobart mixer followed by applying this coating composition to the calcium silicate board containing non-expanded vermiculite obtained in Reference Example 2 to a thickness of 2 mm using the roll coater method to obtain the target coated calcium silicate board. This coated calcium silicate board had a flexible coated film, and exhibited superior characteristics for balance between the amount and rates of moisture absorption and release.

### Embodiment 16

### Composition: (A) 40 wt% non-expanded vermiculite/ (B) 25 wt% acrylic emulsion coating/ (C) 35 wt% calcium silicate

A coating composition was obtained by mixing using a Hobart mixer followed by applying this coating composition to the calcium silicate board containing non-expanded vermiculite, obtained in Reference Example 3, to a thickness of 2 mm using the roll coater method to obtain the target coated calcium silicate board. This coated calcium silicate board had a flexible coated film, and exhibited superior characteristics for balance between the amount and rates of moisture absorption and release.

### Embodiment 17

### Composition: (A) 65 wt% non-expanded vermiculite/ (C) 35 wt% cement (mortar)

A coating composition was obtained by mixing using a Hobart mixer followed by applying this coating composition to the calcium silicate board containing non-expanded vermiculite obtained in Reference Example 2 to a thickness of 2 mm using the roll coater method to obtain the target coated calcium silicate board. This coated calcium silicate board had a hard, hygroscopic coated film, and exhibited superior characteristics for balance between the amount and rates of moisture absorption and release.

### Embodiment 18

### Composition: (A) 35 wt% non-expanded vermiculite/ (C) 30 wt% cement (mortar)/ (D) 35 wt% calcium silicate

A coating composition was obtained by mixing using a Hobart mixer followed by applying this coating composition to the calcium silicate board containing non-expanded vermiculite obtained in Reference Example 2 to a thickness of 2 mm using the roll coater method to obtain the target coated calcium silicate board. This coated calcium silicate board had a hard, hygroscopic coated film, and exhibited superior characteristics for balance between the amount and rates of moisture absorption and release.

### Embodiment 19

### Composition: (A) 65 wt% non-expanded vermiculite/ (B) 35 wt% sodium alginate

A coating composition was obtained by mixing using a Hobart mixer followed by applying the resulting coating composition to the calcium silicate board obtained in Reference Example 3 to a thickness of 2 mm using the roll coater method to obtain the target coated calcium silicate board. This coated calcium silicate board exhibited superior characteristics for balance between the amount and rates of moisture absorption and release.

### Embodiment 20

### Composition: (A) 40 wt% non-expanded vermiculite/ (B) 20 wt% sodium alginate/ (D) 40 wt% allophane

A coating composition was obtained by mixing using a Hobart mixer followed by applying the resulting coating composition to the calcium silicate obtained in Reference Example 3 to a thickness of 2 mm using the roll coater method to obtain the target coated calcium silicate board. This coated calcium silicate board exhibited superior characteristics for balance between the amount and rates of moisture absorption and release.

### Embodiment 21

### Composition: (A) 35 wt% non-expanded vermiculite/ (B) 5 wt% sodium alginate / (C) 20 wt% mortar/ (D) 40 wt% diatomaceous earth

A coating composition was obtained by mixing using a Hobart mixer followed by applying the resulting coating composition to the calcium silicate board, obtained in Reference Example 3, to a thickness of 2 mm using the roll coater method to obtain the target coated calcium silicate board. This coated calcium silicate board had a smooth surface and exhibited superior characteristics for balance between the amount and rates of moisture absorption and release.

Embodiments 22 through 27 described below solve the problems described in the above-mentioned (E).

### Embodiments 22-24

After allowing the calcium silicate construction materials obtained in Embodiments 1, 2 and 5 to stand outdoors for six months, they were respectively crushed to obtain particulate products A through C having a particle size of about 3-5 mm. These products were then used as artificial fertilizer containing siliceous fertilizer and exhibiting satisfactory drainage to grow plants.

### Embodiments 25-27

The resulting particulate products A through C in Embodiments 22-24 were processed in the same manner except for additionally performing steam treatment for 1 hour at about 150°C to obtain artificial soils D through F.

Embodiments 28 through 30 described below solve the problems described in the above-mentioned (F).

### Embodiment 28 (Joining: Attachment of a Railing)

When a railing was attached to wall surface, that used the calcium silicate board obtained in Embodiment 1 as an interior material, with wood screws (thickness: 3.8 mm, length: 32 mm), there were no problems whatsoever with fastening, and adequate joining was obtained.

Furthermore, pulling strength was measured using a pulling strength tester complying with the standards of the Building Research Institute.
Test piece dimensions: 10 mm x 300 mm x 300 mm
Screw insertion sites: Center and 10 cm from end of test piece
Test results: Wood screws - Center: 47 kgf
   End: 47 kgf

### Embodiment 29 (Planing)

When the surfaces of the calcium silicate board, slag gypsum board and gypsum board obtained in Embodiments 2 through 4 were shaved with a flat plane, the shavings were the same as in the case of planing wood, there was no generation of fine powder and smooth planed surfaces were obtained.

### Embodiment 30 (Carving)

The surface of the calcium silicate board obtained in Embodiment 5 was carved into a lattice pattern using a router. There were no observed deletions.

## Claims

1. A construction material composition comprising: blending non-expanded vermiculite into a base material, wherein the blended amount is 5-70 wt% of the total composition (solid portion).

2. The construction material composition according to claim 1 wherein the blended amount is 10-50 wt% of the total composition (solid portion).

3. The construction material composition according to claim 1 wherein the base material is hydrophilic.

4. The construction material composition according to claim 2 wherein the base material is selected from one or more types of gypsum, cement, calcium silicate and slag gypsum.

5. The construction material composition according to claim 1 wherein the vermiculite is activated vermiculite.

6. The construction material composition according to claim 1 wherein the vermiculite is activated after blending.

7. The construction material composition according to either of claims 5 or 6 wherein the activation treatment is steam treatment.

8. The construction material composition according to claim 7 wherein the steam is saturated steam at 105-200°C.

9. The construction material composition according to claim 1 comprising the additional blending of aggregate, reinforcing material, admixture and/or weight reducing material.

10. A production method of a construction material composition comprising: blending non-expanded vermiculite into a base material so that the blended amount is 5-70 wt% of the total composition (solid portion) to obtain a construction material composition.

11. The production method according to claim 10 wherein the base material is selected from one or more types of gypsum, cement, calcium silicate and slag gypsum.

12. The production method according to claim 10 wherein the vermiculite is activated vermiculite.

13. A construction material comprised by forming the construction material composition according to claim 1.

14. The construction material according to claim 13 wherein molding is sheet molding, extrusion molding, press molding or casting.

15. The construction material according to claim 13 wherein the construction material is an interior material.

16. A construction material wherein moisture absorption and release rates in the case of changing the relative humidity from 60-90% are 90% or more of the equilibrium value in 30 minutes for moisture absorption, and equilibrium in 25 minutes or less for moisture release.

17. The construction material according to claim 16 that contains non-expanded vermiculite.

18. A construction material production method comprising: blending non-expanded vermiculite into a base material so that its blended amount is 5-70 wt% of the total composition (solid portion) to obtain a construction material composition, followed by molding this construction material composition to obtain a construction material.

19. A construction material composition comprising: blending non-expanded vermiculite into a base material, and the blended amount is 5-70 wt% of the total composition (solid portion), wherein expanded vermiculite is also blended at 2.5-20 wt% of the total composition (solid portion).

20. The construction material composition according to claim 19 wherein the blended amount of non-expanded vermiculite is 10-50 wt% of the total composition (solid portion).

21. The construction material composition according to claim 19 wherein the base material is selected from one or more types of gypsum, cement, calcium silicate and slag gypsum.

22. The construction material composition according to claim 19 wherein the non-expanded vermiculite is activated vermiculite.

23. A production method of a construction material composition comprising: blending non-expanded vermiculite into a base material so that the blended amount is 5-70 wt% of the total composition (solid portion) and blending expanded vermiculite in an amount of 2.5-20 wt% of the total composition (solid portion) to obtain a construction material composition.

24. A construction material comprised by forming the construction material composition according to claim 19.

25. The construction material according to claim 24 wherein molding is sheet molding, extrusion molding, press molding or casting.

26. The construction material according to claim 24 wherein the construction material is an interior material.

27. A construction material production method comprising: blending non-expanded vermiculite into a base material so that the blended amount is 5-70 wt% of the total composition (solid portion) and blending expanded vermiculite in an amount of 2.5-20 wt% of the total composition (solid portion) to obtain a construction material composition, followed by molding this construction material composition to obtain a construction material.

28. A construction material composition comprising: blending non-expanded vermiculite into a base material, and the blended amount is 0.5-70 wt% of the total composition (solid portion), wherein the portion of the non-expanded vermiculite of 300 µm or less is 0.5-15 wt% of the total composition (solid portion).

29. The construction material composition according to claim 28 wherein non-expanded vermiculite fine powder, of which 90% or more is 300 µm or less, is blended into the base material in an amount of 0.5-15 wt% of the total composition (solid portion).

30. The construction material composition according to claim 28 wherein non-expanded vermiculite fine powder, of which 90% or more is 300 µm or less, is blended into the base material in an amount of 0.5-10 wt% of the total composition (solid portion).

31. The construction material composition according to claim 28 wherein the blended amount of non-expanded vermiculite fine powder of which 90% or more is 300 µm or less is 1-5 wt% of the total composition (solid portion).

32. The construction material composition according to claim 28 wherein the base material is selected from one or more types of cement, calcium silicate and slag gypsum.

33. The construction material composition according to claim 28 wherein the vermiculite is activated vermiculite.

34. A production method of a construction material composition comprising: blending non-expanded vermiculite into a base material, and the blended amount is 0.5-70 wt% of the total composition (solid portion), wherein the non-expanded vermiculite is blended so that the portion of the non-expanded vermiculite that is 300 µm or less is 0.5-15 wt% of the total composition (solid portion) to obtain a construction material composition.

35. The production method of a construction material composition according to claim 34 wherein non-expanded vermiculite fine powder, of which 90% or more is 300 µm or less, is blended into the base material in an amount of 0.5-15 wt% of the total composition (solid portion).

36. The production method according to claim 34 wherein the base material is selected from one or more types of cement, calcium silicate and slag gypsum.

37. The production method according to claim 34 wherein the vermiculite is activated vermiculite.

38. A construction material comprised by forming the construction material composition according to claim 28.

39. The construction material according to claim 38 wherein molding is sheet molding, extrusion molding, press molding or casting.

40. A construction material production method comprising: the production of a construction material composition in which non-expanded vermiculite is blended into a base material, and the blended amount is 0.5-70 wt% of the total composition (solid portion); wherein the non-expanded vermiculite is blended so that the portion of non-expanded vermiculite of 300 µm or less is 0.5-15 wt% of the total composition (solid portion) to obtain a construction material composition, followed by molding of this construction material composition to obtain a construction material.

41. The construction material production method according to claim 40 wherein non-expanded vermiculite fine powder in which 90% or more is 300 µm or less is blended into the base material in an amount of 0.5-15 wt% of the total composition (solid portion).

42. A coating composition containing (A) non-expanded vermiculite.

43. A coating composition containing (A) non-expanded vermiculite and (B) organic binder and/or (C) inorganic binder.

44. A coating composition containing (A) non-expanded vermiculite, (B) organic binder and/or (C) inorganic binder, and a hygroscopic material in which the specific surface area as determined by BET is 10 m²/g or more.

45. The coating composition according to claim 43 or 44 wherein the (B) organic binder is selected from a paint and/or paste.

46. The coating composition according to claim 45 wherein the paint is selected from an acrylic, urethane, epoxy, polyester, silicone, vinyl chloride, vinyl acetate, polyvinyl alcohol, polyvinyl butyral or styrene-butadiene-based resin or emulsion paints.

47. The coating composition according to claim 45 wherein the paste is selected from alginates, starch, mannan, dextrin, protein and methylcellulose-based pastes.

48. The coating composition according to claim 43 or 44 wherein the (C) inorganic binder is a hydraulic material.

49. The coating composition according to claim 48 wherein the hydraulic material is cement or hemihydrate gypsum.

50. The coating composition according to claim 44 wherein the hygroscopic material is selected from calcium silicate, diatomaceous earth, zeolite or allophane.

51. The coating composition according to claim 44 containing (A) non-expanded vermiculite at 5-70 wt%, (B) organic binder and/or (C) inorganic binder at 5-40 wt%, and (D) hygroscopic material at 0-70 wt% relative to the total composition solid portion.

52. A coated body comprising the coating of an article to be coated with the coating composition according to claim 43.

53. The coated body according to claim 52 wherein the article to be coated is a construction material, architectural interior, indoor fixture or any members thereof.

54. The coated body according to claim 52 wherein the article to be coated is a joint or repaired portion.

55. A soil conversion method for waste construction materials comprising: converting waste construction materials to soil by crushing waste construction materials comprised of a construction material that has been molded from a construction material composition comprised by blending non-expanded vermiculite into a calcium silicate-based construction material.

56. A soil conversion method for waste construction materials comprising: converting waste construction materials to soil by crushing waste construction materials comprised of a construction material that has been molded from a construction material composition comprised by blending non-expanded vermiculite into a calcium silicate-based construction material, and then performing steam treatment.

57. A soil conversion method for waste construction materials comprising: converting waste construction materials to soil by performing steam treatment on waste construction materials comprised of a construction material that has been molded from a construction material composition comprised by blending non-expanded vermiculite into a calcium silicate-based construction material, and then crushing.

58. The waste construction material soil conversion method according to claim 55 wherein the blended amount of non-expanded vermiculite is 5-70 wt% of the construction material composition (solid portion).

59. The construction material soil conversion method according to claim 56 or 57 wherein steam treatment is carried out at 100-200°C.

60. An artificial soil obtained according to the waste construction material soil conversion method according to claim 55.

61. The artificial soil according to claim 60 wherein a fertilizer component is added.

62. A construction material comprising joining with a fastener a construction material comprised by molding a construction composition comprising the blending of non-expanded vermiculite into a base material, that blended amount being 5-70 wt% of the total composition (solid portion).

63. The construction material according to claim 62 wherein the fastener is a nail, machine screw, bolt and nut, tack, staple or pin.

64. The construction material according to claim 62 wherein the construction material is an interior material.

65. The construction material according to claim 62 wherein the surface of the construction material is shaved with a plane.

66. The construction material according to claim 62 wherein the surface of the construction material is carved.

67. The construction material according to claim 62 wherein the blended amount is 10-50 wt% of the total composition (solid portion).

68. The construction material according to claim 62 wherein the base material is selected from one or more types of slag, cement, calcium silicate or slag gypsum.

69. The construction material according to claim 62 wherein the vermiculite is activated vermiculite.

70. The construction material according to claim 69 wherein the activation treatment is steam treatment.

71. The construction material according to claim 62 wherein the molding is sheet molding, extrusion molding, press molding or casting.

72. A construction material comprising shaving with a plane the surface of a construction material comprising by molding a construction material composition comprising the blending of non-expanded vermiculite into a base material, and that blended amount being 5-70 wt% of the total composition (solid portion).

73. A construction material comprising carving the surface of a construction material comprised by molding a construction material composition comprising the blending of non-expanded vermiculite into a base material, and that blended amount being 5-70 wt% of the total composition (solid portion).

74. A construction material joining method comprising joining with a fastener a construction material obtained by blending non-expanded vermiculite into a base material so that the blended amount is 5-70 wt% of the total composition (solid portion) to. obtain a construction material composition, followed by molding that construction material composition.

75. The construction material joining method according to claim 74 wherein the fastener is a nail, machine screw, bolt and nut, tack, staple or pin.

76. The construction material joining method according to claim 74 wherein the surface of the construction material is shaved with a plane.

77. The construction material joining method according to claim 74 wherein the surface of the construction material is carved.
